(19) Europäisches Patentamt
European Patent Office
Office européen des brevets

(11) **EP 4 070 983 A1**

(12) **EUROPEAN PATENT APPLICATION**

(43) Date of publication:
**12.10.2022 Bulletin 2022/41**

(21) Application number: **21167708.3**

(22) Date of filing: **09.04.2021**

(51) International Patent Classification (IPC):
**B60L 53/122** (2019.01)   **B60L 53/30** (2019.01)
**B60L 53/36** (2019.01)   **B60L 53/38** (2019.01)
**B60L 53/66** (2019.01)   **H02J 50/10** (2016.01)
**H02J 50/80** (2016.01)   **H02J 50/90** (2016.01)

(52) Cooperative Patent Classification (CPC):
**B60L 53/122; B60L 53/305; B60L 53/36;**
**B60L 53/38; B60L 53/66;** B60L 2260/32

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **BRUSA Elektronik AG**
**9466 Sennwald (CH)**

(72) Inventors:
• **Böhler, Lukas**
**7323 Wangs (CH)**

• **Islinger, Simon**
**81829 München (DE)**
• **Stauss, Hannes**
**6850 Dornbirn (AT)**
• **Lee, Joshua Reuben**
**80634 Mu nchen (DE)**

(74) Representative: **Rösler Rasch van der Heide &**
**Partner**
**Bodenseestraße 18**
**81241 München (DE)**

Remarks:
Claims 16 - 40 are deemed to be abandoned due to non-payment of the claims fees (Rule 45(3) EPC).

(54) **AN APPARATUS FOR AND METHOD OF GUIDING A VEHICLE**

(57)     The coupling factor between coils in a wireless charging system provides an indication of distance between the coils. The indication of distance can be used to assist in driving the vehicle to control the relative position between the coils. The indication of distance can be used in a vehicle positioning together with a location sensor to system calculating a path to a parking position. Transducers may be used to provide haptic feedback for a driver of the vehicle based on the indication of distance on the vehicle relative to a parking position.

FIG. 1

**EP 4 070 983 A1**

**Description**

FIELD

A pad module for use with another pad module to transfer power magnetically in an electric vehicle charging system; a method of transferring power magnetically from one pad module to another in an electric vehicle charging system; an apparatus for and method of assisting a driver in parking a vehicle at a parking position in a parking space; and an apparatus and method for guiding a vehicle to a parking position.

BACKGROUND

Wireless power transfer techniques are increasingly being used to transfer power from electrical power sources to a wide range of devices including electric vehicles requiring kilowatts of power. In addition to the convenience of not having to plug in a device to power it or recharge its batteries, the absence of wires and cables makes for tidier parking spaces, while reducing clutter, trip and shock hazards. There are several ways in which power may be transferred wirelessly, including capacitive coupling and inductive coupling, both of which offer advantages over resistive (i.e. wired) coupling for the purpose of supplying power to a device.

Wireless power transfer systems deliver from a power source across a gap to a device or load. Typically, the gap is an air gap between magnetic coils. Systems can be designed to operate at fixed or variable frequencies which can be useful for varying load conditions. The energy thus delivered may be used for example to power a device or charge a battery. This includes driving an electric motor in an electric vehicle and charging batteries in the circuit or vehicle. The larger the circuit or motor, or the faster the battery is required to charge, the greater the power that must be transferred across the air gap.

Wireless power transfer techniques have developed in different fields of technology which has resulted in different terms being used to describe essentially the same thing. Such terms as 'magnetic coupling,' 'magnetic induction, ' 'inductive power transfer,' 'inductive charging' and 'resonant inductive power transfer' are common. Although there may be minor differences, these terms are generally used broadly and interchangeably to refer to systems that transfer power from a source across an air gap to a load by way of a magnetic field. The term 'inductive charging system' or ICS will be used herein to identify this kind of system.

In a similar vein, various terms are used to refer to different elements of an inductive charging system (ICS). Essentially an ICS comprises equipment associated with the power supply and equipment associated with the device. The power supply equipment comprise circuitry that converts energy from the power supply into a form suitable for driving a coil. Similarly, the device equipment converts energy induced in a coil by the magnetic field into a form suitable for powering the device or charging batteries in the device.

Inductive charging systems can be used to charge batteries in electric vehicles. Drivers can park their cars over charging equipment on the ground, which couples magnetically with a charging equipment on the vehicle to transfer energy to the battery. For autonomous vehicles inductive charging eliminates the need to manually connect the vehicle to a supply once it has driven to a charging location. When needed power from the vehicle's battery may be fed back into the power source, e.g. the power network in a smart home or a utility company's power grid.

In an inductive charging system (ICS) for use with electric vehicles the power supply equipment has various names including ground assembly, ground pad and ground pad module (GPM) which is connectable to a mains power supply. The device equipment is variously known as the vehicle assembly, the vehicle pad or the car pad module (CPM) and is mountable in a vehicle such as a car to provide energy to charge the vehicle's battery. The naming in many situations depends on what language is adopted by a given organisation.

Naturally, an electric vehicle ICS is capable of working with diverse vehicles, including cars and heavier road vehicles, including trucks, buses and trams, and is not limited to use with cars be they road-going or otherwise. The terms 'ground pad module' (GPM) and 'car pad module' (CPM) will be used herein to identify the two parts of an ICS for electric vehicles.

Other terms that vary between different implementations of an ICS include 'magnetic coils', 'induction coils' and 'antennas.' These terms too are used loosely and essentially interchangeably to describe the parts of an inductive charging system that transfer energy across the air gap. Although nothing should turn on the use of these different terms, it is worth noting for the sake of accuracy that the elements are actually coils rather than antennas. This is because at typical operating frequencies the elements transfer energy in the near field where only the magnetic field is present.

In contrast, antennas are designed with the electromagnetic field in mind, which forms once the radiated energy passes from beyond the near field to the far field. Where the near field ends and the far field begins depends on characteristics of the transmitting device (e.g. coil or antenna). For wireless power transfer applications an exact definition is usually unnecessary because the size of the air gap and the frequencies that the system operates places it firmly in the near field. Nevertheless, the aforementioned 'magnetic coils,' 'induction coils' 'and 'antennas' are similarly used interchangeably by those active in designing wireless power transfer devices and systems.

Inductive charging systems may use magnetic coils either alone or coupled with other tuned or tuneable elements. In electric vehicle power transfer applications, a ground pad module may contain a coil in combination with associated driving electronics or it may contain the coil with some or all the associated electronics being provide in a separate enclosure. Either way, the coil in the ground pad module is used to transmit power via a magnetic field. Similarly, a car pad module may contain a coil in combination with associated control electronics or it may contain the coil with some or all the associated electronics being provide in a separate enclosure. Either way, the coil in the car pad module is used to receive power via a magnetic field.

One area of focus in the design of inductive charging systems is accurate alignment of the ground coil and the vehicle coil. Poor alignment reduces efficiency of the energy transfer. When the system is operational, the magnetic field can transfer large amounts of energy across the space between the ground pad module and the vehicle pad module. Even a small domestic system in use generates a magnetic field capable of transferring 2 to 3kW of energy between the pads. Other systems operate at much higher power levels. An inefficient link between the ground and vehicle pads leads to stray currents in conducting elements of the system. The energy therefrom is converted to heat. So not only is energy lost, but it also causes heating, which is plainly undesirable.

With this in mind, effort has been put into designing inductive charging systems that are able to assist an operator (e.g. a driver of a vehicle) in positioning the vehicle coil over the ground coil to optimise power transfer and minimize losses and the problems associated therewith.

SUMMARY

As defined in the claims, the invention provides a pad module for use with another pad module to transfer power magnetically in an electric vehicle charging system; a method of transferring power magnetically from one pad module to another in an electric vehicle charging system; an apparatus for and method of assisting a driver in parking a vehicle at a parking position in a parking space; and an apparatus and method for guiding a vehicle to a parking position.

The coupling factor between coils in a wireless charging system provides an indication of distance between the coils. The indication of distance can be used to assist in driving the vehicle to control the relative position between the coils. The indication of distance can be used in a vehicle positioning together with a location sensor to system calculating a path to a parking position. Transducers may be used to provide haptic feedback for a driver of the vehicle based on the indication of distance on the vehicle relative to a parking position.

The invention and features thereof are set forth with particularity in the claims and together with advantages thereof may become clearer to those possessed of the appropriate skill from consideration of the following detailed description given by way of example with reference to the accompanying drawings.

THE DRAWINGS

FIG. 1     is a block diagram of an inductive power transfer system;
FIG. 2     is a plan view of a car driving into a parking space;
FIG. 3     shows coils positioned relative to each other;
FIG. 4     is a plot showing a coupling factor varying with offset between two coils;
FIG. 5     is a plot showing current varying in a primary coil;
FIG. 6     is a plot showing current varying in a secondary coil;
FIG. 7     is a plot showing how coupling factor can vary with distance between coils;
FIG. 8     is a schematic illustration of a car with a vehicle control unit and associated actuators;
FIG. 9     shows elements that together comprise a vehicle positioning system;
FIG. 10     is a first diagram representing simulation of a vehicle rolling into and out of a dip;
FIG. 11     is a graph showing motion in the simulation;
FIG. 12     is a second diagram representing simulation of the vehicle rolling into and out of the dip;
FIG. 13     is a third diagram representing simulation of the vehicle rolling into and out of the dip;
FIG. 14     is a graph showing torque applied to actuators to create the simulation;
FIG. 15     is a graph showing force applied by a driver to counter the torque in the simulation;
FIG. 16     is a graph representing the sum of torques in FIGs. 13 and 14;
FIG. 17     is schematic plan view of a car at a position between two rows of parking spaces;
FIG. 18     is schematic plan view of a car heading toward a selected bay.

**EP 4 070 983 A1**

DETAILED DESCRIPTION

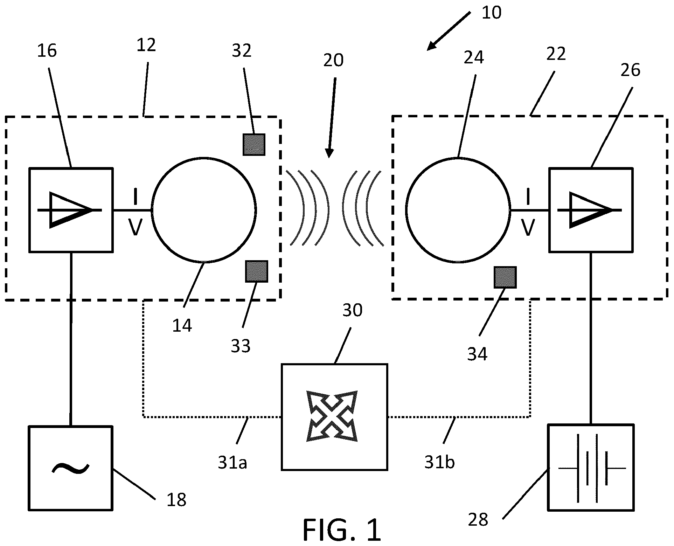

Turning now to FIG. 1 of the accompanying drawings, an inductive charging system (ICS) 10 for use in charging a batter in an electric vehicle. The ICS 10 comprises a ground pad module (GPM) 12 containing a ground or supply coil 14 and driving circuitry 16 couplable to an electrical power supply 18. Power signals from the supply 18 are conditioned by the driving circuitry 16 to put them in suitable form for application to the supply coil 14. The coil 14 is driven by this application of the power signals - represented as current I and voltage V - to generate a magnetic field 20.

The power supply 18 may be a domestic voltage supply at e.g. 110v or 220v. Such domestic installations would be limited to 2-3kW, meaning that the charging of a battery will typically take several hours. A larger power supply such as a poly- (plural) phase supply at 415 volts or higher enables charging to be completed more quickly. Larger powers - and therefore faster charging - may be provided in commercial or industrial implementations.

The size and form of the ground pad module 12 depends on the technical requirements of the system. The supply coil 14 is depicted as a circle in FIG. 1 but it could be any polygonal or elliptical shape. The coil 14 may be configured as a solenoid, arranged in a double-D configuration or any other of the widely available coil topologies. The exact form is determined by the technical requirements of the system and on routine design choices. To give an idea of size, the ground pad module 12 is typically around 600mm in width. The height of the GPM 12 should be as low as possible to avoid the GPM causing a snagging hazard with the underside of a vehicle or a tripping hazard. Plainly, this hazard can be avoided where an installation allows for recessing the GPM so that it is flush with the ground.

The inductive charging system (ICS) 10 also comprises a car pad module (CPM) 22. In use the CPM 22 is placed on a car (not shown) at a location determined by design considerations, e.g. under the chassis or floor pan. When the car is driven over the GPM 12 and the CPM 22 positioned thereover, energy can be transferred from the GPM to the CPM. The magnetic field 20 is converted by a car or vehicle coil 24 into power signals - represented as current I and voltage V - that are conditioned by driving circuitry 26 to put them in a form suitable to deliver energy to, and thus charge, a battery 28.

As with the ground pad module (GPM) 12, the size and form of the CPM 22 is governed by technical requirements and choices made when designing the ICS 10. The car pad module (CPM) 22 is similarly provided in a package. Again, the exact form of the vehicle coil 24 and thus the shape and size of the CPM 22 is determined in the most part by technical requirements and design choices. The coil 24 need not be circular as depicted and, indeed, it need not even have the same form or topology as the coil 14 in the ground equipment 12. Space in a vehicle is limited. The aim usually is to make the CPM 22 as small as possible, e.g. around 300mm in width.

A controller 30 serves to control operation of the GPM 12 and CPM 22. Although shown as a single unit in FIG. 1, the controller 30 may be wholly in the GPM 12 or the CPM 22, or have elements placed in the GPM 12 and the CPM 22. Among other things, the controller 30 provides a way for the two parts 12, 22 of the system 10 to communicate with each other, as represented by the dashed lines 31a and 31b in the drawing. The communication medium may be hard wired or any one of the widely available wireless protocols, including Wi-Fi and Bluetooth.

In use information is transferred between the GPM 12 and the CPM 22 to control operation of the system. When the system 10 is used to charge a battery, the operating conditions change with the level of charge held in the battery. The more charge in the battery, the more energy it takes to add further charge. The current I and voltage V power signals associated with the coils are therefore monitored e.g. to control generation of the magnetic field 20 to optimise power transfer and minimise losses. Safety features (not shown) may be included in the system 10 that send signals to the controller 30 indicating when the coils may be energised, power transfer may begin or end or when it must be interrupted because of a hazard situation such as a foreign or living object entering the magnetic field 20.

One convenience of an ICS 10 is that the battery 28 on a vehicle may be charged simply by parking the vehicle over the ground pad 12 in a position where the car pad module 22 and the ground pad module 12 are aligned. Vehicle guidance and alignment equipment is provided to assist the driver in correctly positioning the vehicle, and thus the car pad module 22, relative to the ground pad module 12.

To this end, an ICS 10 will typically include position sensing devices 32, 33 and 34 on the GPM 12 and the CPM 22. For the purpose of illustration only the GPM 12 is provided with two sensing devices 32, 33, and the CPM with one device 34. This enables position to be determined by triangulation. Depending on the implementation, it may be sufficient for the GPM and the CPM to be provided with a single device or for both the GPM and the CPM to be provided with plural position sensing devices. In use, the sensing devices 32, 33, 34 transmit and receive signal in a manner that enables the system controller 30 to determine the relative position of the GPM 12 and the CPM 22.

In early adoption of wireless vehicle charging it is expected that automobile companies will supply an entire charging system, i.e. both GPM and CPM to customers. As the market develops, supply of the GPM may be vested with third parties, with a desire to make the CPM as reliable, light and as cheap as possible. In future, a greater proportion of the system control - and this includes parts of the controller 30 and the position sensors 32, 33, 34 - may be placed in the GPM. Naturally, some of the positioning sensors will remain in the CPM or the vehicle or both. Exactly how much is a matter of choice depending on constraints and practicalities in the design specification.

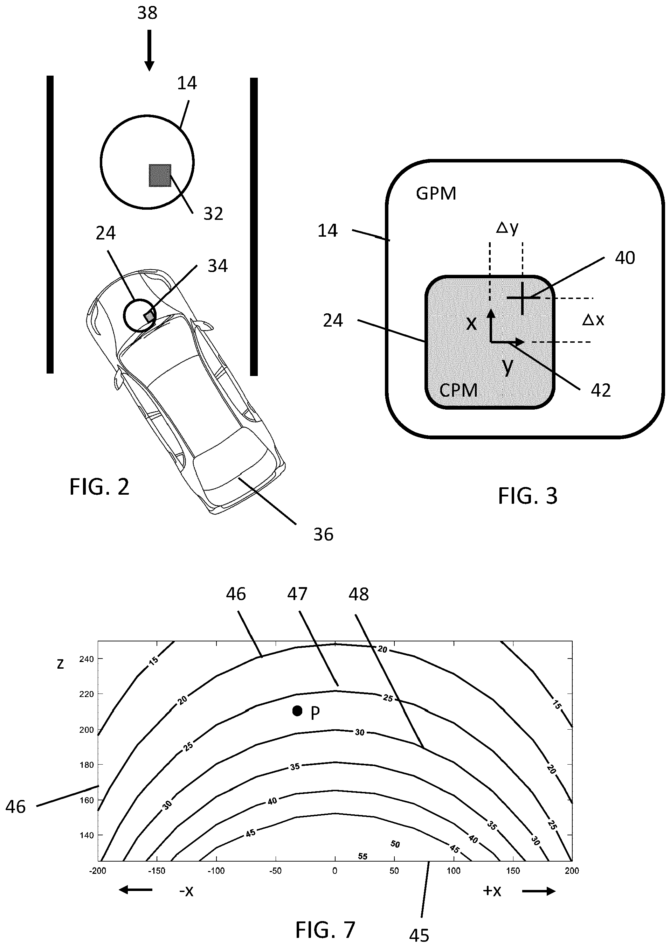

FIG. 2 of the accompanying drawings depicts a car 36 driving into a parking space 38. A coil 14 of a ground pad module GPM (not shown) is placed in the parking space 38 at a position convenient for the car 36 to park. The exact position of the GPM and hence the coil 14 in the parking space 38 depends on various factors.

The position is now defined in in various Standards that are now being completed for inductive charging systems for electric vehicles. For example, the SAE Standard J2954 provides for various positions depending on the size and arrangement of a given parking space. The aim is to present a location that eases alignment of the coils 14, 24 in the GPM and CPM.

The ground pad module 12 includes a signalling devices 32 which work with a similar device 34 on the car pad module 22 as the car enters the parking space. Information is passed between the signalling devices 32, 34 which is interpreted by the system controller 30 (see FIG. 1) to determine the relative position of the GPM 12 and the CPM 22. The signalling devices may form part of an apparatus for guiding an eclectic vehicle such as described in German patent application DE102020110220.8, filed 14-Apr-20, the teachings of which are incorporated herein by reference.

Modern cars are being designed increasingly to include more signalling devices, sensors and monitoring sub-systems to control many routine operations associated with the running and driving of the vehicle. In the interest of saving cost, and depending on the equipment to be supplied on a given model of car, it may be possible to use some of the other equipment to assist in the aligning process. Suitable existing sensors provided for other subsystems may be deployed in the determination of distance. For example, data from accelerometers or inertia sensors provided on the vehicle may be to provide additional information to assist positioning.

In an efficiently operating system, the coils 14, 24 in the GPM 12 and CPM 22 will be aligned during power transfer. The greater the alignment, the lower the losses and the more efficient the power transfer will be. Current systems typically operate with an efficiency that varies between around 86% and 91% depending on the degree of alignment. While acceptable, higher efficiencies would be desirable.

Misalignment can lead to more leakage of the magnetic field 20 from underneath the vehicle, which raises safety issues if the leakage is too great. Misalignment also leads to losses in the system, which causes stray currents to flow in the coils and associated electrical components and structure. Designing a system that can handle these stray fields and currents adds weight, increases complexity - which may lead to a reduction in reliability - and pushes up the cost of the final product.

Coil alignment is also identified as a requirement in various wireless vehicle charging systems including the previously mentioned SAE J2954. That Standard specifies an alignment tolerance in terms of x-offset, y-offset and z-offset. The orientation of x, y and z is arbitrary but usually follows an agreed form, where x is the direction along the axis of the parking space and the vehicle, y is the direction perpendicular to x and z is height. This is illustrated for x and y in FIG. 3. The z axis is not shown but would be in a direction perpendicular to the x and y axes, i.e. pointing out of the page.

FIG. 3 shows a GPM coil 14 and a CPM coil 24 positioned relative to each other. The coils 14, 24 are substantially square in this drawing. This illustrates the point that the form of the coils is optional and depends on system requirements and design choices. The centre of- or other position on or at - the GPM coil 14 is marked by a cross 40. Similarly, a location on the CPM coil 24, say the centre, is identified by (x, y) coordinates 42. The displacement between the two coils is expressed as a difference or offset coordinates ($\Delta$x, $\Delta$y).

Naturally, the coordinate system (x, y) could be located at the coil 14 associated with the GPM and a location on the CPM coil 24 equated to the cross. The calculation is essentially one of relative position, making it acceptable to associate the (x, y) frame of reference with either coil 14, 24. The way in which the relative position is expressed is a matter of design choice. Depending on the specifics of an implementation it could be expressed as, say, polar coordinates (r, $\phi$) or as a vector.

In an ideal situation the vehicle would be positioned so that ($\Delta$x, $\Delta$y) would be zero, i.e. (0, 0). In reality, design constraints and practical limitations make attaining this ideal a challenge. SAE J2954 specifies a tolerances of $\Delta$x = $\pm$75mm and $\Delta$y = $\pm$100mm. The Standard leaves the ground clearance $\Delta$z open to be specified by the manufacturer. The usual convention for +ve and -ve values is that x is positive when the car 36 is in the position shown in FIG. 2 heading toward the ground coil 14. If the car 36 overshoots the correct position - i.e. the vehicle coil 24 moves past the ground coil 14 further into the space 38 - the value of x becomes negative.

Alignment greater than these values in considered to be unacceptable for various reasons including increases in losses and reductions in power transfer efficiency. Thus, the Standard defines a volume in space centred on the ground coil 12 in which the vehicle coil 24 may be placed. Implicit in this is that when the vehicle coil 24 is positioned anywhere within the volume it must be able to couple with the ground coil 12 with an acceptable level of power transfer efficiency.

One of the operating characteristics of an inductive charging system (ICS) that affects power transfer is the coupling coefficient or factor $\kappa$ of the two coils 14, 24. Coupling is a measure of how well energy is able to be transferred via the magnetic field between the two coils 14, 24. The coupling coefficient is discussed extensively in technical papers and is well understood. It need not - and in the interest of brevity will not - be discussed in detail herein.

In a static system the relative position of the coils does not change and the coupling factor $\kappa$ effectively remains

constant. But in a system where the relative position of the coils varies - as is the case in FIG. 3 where a vehicle with a CPM is being parked over a GPM - the coupling factor κ varies with the position of the vehicle coil relative to the ground coil. The coupling factor κ is therefore dependent on the distance between the coils. This can be used to advantage in positioning a vehicle and/or aligning coils.

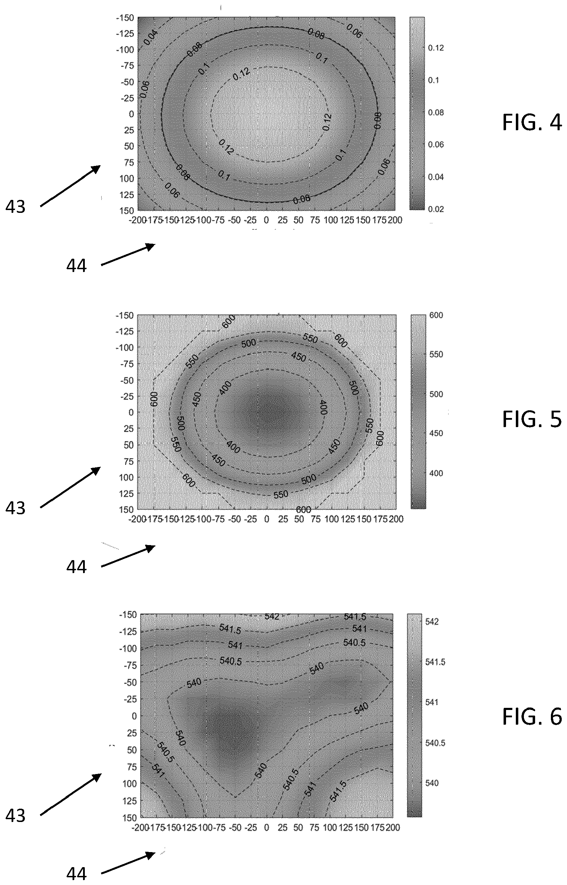

FIG. 4 is a plot providing a visual representation of how the coupling factor κ varies with the offset between the coils 14, 24. The horizontal axis 43 represents the offset in the y direction between the two coils. The vertical axis 44 represents the offset in the x direction between the coils. Both axes 43, 44 have 0 (zero) offset at their centres, with negative and positive values moving away from the zero point. The area of the graph approximates to the typical size of a coil, 400mm x 300mm. The scale is shown with the (0, 0) position in the centre of the graph.

The value of the coupling factor κ is at a maximum when (Δx, Δy) is zero, i.e. (0, 0), and drops away the greater the (Δx, Δy) offset is between the coils 14, 24. Thus, as may be apparent from FIG. 4, the coupling coefficient κ will be at a maximum when the coils are optimally aligned. For circular coils optimal alignment will usually correspond to the situation where the centres of the coils are aligned. With other coil topologies the optimal position may be different, although the principle will be the same - a maximum coupling factor κ when aligned, dropping as the offset increase. Either way, placing the coils 14, 24 at their optimal position will result in the highest coupling coefficient and thus the greatest energy transfer and fewest losses in the system.

FIGs. 5 and 6 are similar graphs to that of FIG. 4 showing how current varies in the primary coil 14 (FIG. 5) and in the secondary coil 24 (FIG. 6) depending on the x, y offset, 43, 44. In FIG. 5 the primary current behaves in much the same way as the coupling factor κ and is at a minimum when κ is at a maximum. In FIG. 6 the plot of current in the secondary coil looks less like that of the coupling factor κ in FIG. 4. Nevertheless, it should still be apparent that the secondary current is reduced with alignment and increases with offset.

This can also be represented mathematically. It can be shown that the power output $P_{out}$ of an inductive power transfer system can be calculated from the following equation:

$$P_{out} = \omega.\kappa.I_1.I_2\sqrt{L_1.L_2}$$

where

$\omega$ = the operating frequency in radians
$I_1$, $I_2$ = the current in each of the coils
$L_1$, $L_2$ = the inductance of each of the coils, and
$\sqrt{L_1.L_2}$ = the mutual inductance between the coils.

It follows from this that maximising the value of the coupling factor κ will maximise $P_{out}$. Since power P is a function of voltage V and current I in the coils 14, 24 (see FIG. 1) it should also be appreciated that the coupling factor κ can be continuously determined by measuring the voltages and currents in coils. One way of determining the coupling factor is to energise one coil and measure what happens in the other coil. For example, the driving circuitry may induce a small known current in the GPM coil 14 and measure the resulting short circuit current in the CPM coil 24 or vice versa.

The known current would usually be driven at the resonant (i.e. operating) frequency of the coils, although the measurement could be done at another frequency if so desired or necessary for a given implementation. The ratio between these two measured currents is the coupling factor. Naturally, voltages may be used to energise the coils to determine the coupling factor in essentially the same way as current-based energisation.

FIG. 7 is a plot showing an example of how the coupling factor κ may vary with distance between coils in a practical situation, e.g. the situation in FIG. 2 where the car 38 is approaching from its right the space 38 in which a ground coil 14 is located. The horizontal axis 45 in FIG. 7 corresponds to the x-direction shown in FIG. 3 and represents the ± x-distance in mm between the coils 14, 24. An x-offset of ±200mm is shown. The vertical axis 46 is scaled in mm from ~150mm to ~250mm. The axis 46 corresponds to the z-direction, i.e. the height of the coil in the car pad module 22 above the coil in the ground pad module 12. Lines, e.g. 46, 47, 48, show how the coupling factor κ changes with x- and z-offsets. The coupling factor κ increases as the offset is reduced and the coils are brought into closer alignment in the x-direction and in the z-direction.

It should be noted that physical alignment of the coils is not always the same as magnetic alignment. Physical alignment is usually a good indicator, but there may be a difference between the two. Environmental variations for a given installation may affect the magnetic field in such a way that the optimum alignment is at a position different to what physical alignment would say is correct. Depending on the installation, environmental factors may include metal in the ground or surrounding structures (e.g. reinforcing bars in concrete), loads carried by the vehicle that affect its height and tyre pressure. Thus, physical (x, y, z) alignment gives a useful estimate of the relative positions of the two coils. And the coupling factor $\kappa$ achieves more accurate alignment of the magnetics.

Conventional x-, y-based positioning may still be used as the vehicle is manoeuvred into the parking space. At distances greater than, say, a metre the accuracy of the positioning equipment is sufficient to provide good guidance of the vehicle. The coupling factor $\kappa$ is useful over shorter distances where the information it provides enables vehicle positioning to a closer tolerance.

Since coupling is proportional to magnetic alignment, using the coupling factor $\kappa$ in the final stage of alignment enables an optimum position to be identified between the two coils. It is natural to assume that a high coupling factor is an important target. It may be, but is not always the best solution. The driving circuitry 16, 26 in the GPM 12 and CPM 22 comprise power electronics that are designed to operate within a coupling range.

Since the relevant Standards specify a volume in which the vehicle coil 24 my be positioned relative to the ground coil 12, there may be circumstances where it is desirable to achieve a more uniform value of coupling $\kappa$ within the volume. An acceptable coupling factor may be specified as a range to be taken into account when designing an inductive charging system.

For example, the ICS 10 may be designed to have a coupling factor between, say, 25 and 30 within the volume, say at the position P between the lines 47 and 48 in FIG. 7. Under these circumstances, a maximal value of $\kappa$ within the volume would be traded for greater uniformity of coupling or a coupling factor within an acceptable range or both. Among other things using a range relaxes the design requirements for a given system. There will be less of a need for the circuitry to work under more extreme conditions. Achieving a more uniform value of coupling $\kappa$ can increase overall power transfer efficiency.

Operation outside the coupling range is usually restricted to avoid damaging the electronics. An alternative would be to make the electronics more robust, but that would push up the cost. Where the coupling factor $\kappa$ is too low or too high, i.e. below or above the range, the ICS 10 may prohibit charging. In a more sophisticated system charging could be made a function of coupling factor $\kappa$. Below the lower end of the range charging would begin and increase as the value of $\kappa$ rises toward the range and vice versa as the coupling increases above the range.

When a coil in a charging system is powered it generates a magnetic field that carries a great deal of energy. Even in a domestic installation the field will carry around 3kW. Powers of 20kW or greater are not unusual in commercial and industrial applications. Magnetic field safety is specified in the Standards directed to wireless electric vehicle charging. Among other things, the Standards do not permit operation of the coil in the ground pad until that coil is covered by the vehicle. The controller 30 in the ICS 10 ensures compliance with this requirement.

Thus, for practical reasons, the coupling factor $\kappa$ is not measured until the two coils 14, 24 are close to each other. Since the coupling factor $\kappa$ is of most use over shorter distances, its use in determining position is not unduly inhibited by safety considerations. The coils can be energised in that last half to one metre and the coupling factor used to assist alignment accuracy as the coils are brought together.

It should be appreciated from the forgoing that the measurement of $\kappa$ is proportional to the efficiency of the inductive charging system. The coupling factor $\kappa$ is also dependent on the distance between the coils. Continuous measurement of $\kappa$ makes it possible to get accurate information relating to distance between the coils 14, 24 in the GPM 12 and the CPM 22. An accurate instantaneous knowledge of the offset is data that can be used to assist in vehicle positioning. Values of $\kappa$ provide useful feedback in vehicle positioning operations.

While positioning systems that include such sensors 32, 33, 34 as shown are capable of providing position information as a vehicle drives into a parking space, the provision of additional information in the form of the coupling factor $\kappa$ facilitates parking. Even where high accuracy is not required, the inclusion of coupling factor $\kappa$ data may enable cheaper components to be used to achieve the required level of accuracy.

Driving into a parking space is a straightforward task for many drivers who feel that they do not need any help. But when it comes to aligning coils the driver's skills can only go so far. While the ground coil may be visible as the driver enters the space, it is quickly obscured by the front of the car. The vehicle coil is never visible because it is placed under the car.

Thus, while driving a car toward and into a space may be within the skills of many drivers, some assistance is required to complete the manoeuvre with optimum alignment between the coils. The need for accuracy increases as the distance between the coils reduces to below, say, a metre. The final, say 300mm requires even finer positioning if the coils are to be optimally aligned.

Modern vehicles usually comprise a user interface, e.g. a monitor in the dashboard that displays useful vehicle information while stationary and driving. The vehicle control unit may be configured to output position data to the user interface that serves as a visual aid during parking. The monitor provides a visual representation of the relative positions of the coils during parking. The representation may be as simple as the coil positions depicted in FIG. 3 or it may be a more complex graphical representation showing essentially the same information.

While the provision of coli position indicators on a monitor provides useful information, use of that information requires a change in driver behaviour. Drivers have to take their eyes away from the immediate environment to get further information from the monitor. This is not a natural part of the driver's behaviour during the parking process. It is another thing for the driver to consider in an operation that already requires a high degree of concentration.

Many vehicles now comprise various driver assist or driving control systems aimed at increasing safety. These include lane assist, parking assist and automatic parking systems. Such systems typically comprise a controller coupled to various sensors placed around the vehicle including proximity sensors sensing nearby objects and accelerometers sensing the orientation of the vehicle. Transducers, i.e. sensors and actuators are coupled to the accelerator pedal, the brake pedal and steering to provide driver feedback or to control a driving operation (e.g. lane alignment or parking). Driver feedback may be in the form an audible chime or voice, a light on the dashboard, or tactile or haptic reactions through the pedals, steering wheel or even the driver's seat. Thus, modern vehicles include controllers and a wealth of actuators, sensors and user interfaces that are operated to assist various driving and parking functions.

These driving and parking control and assist systems may be deployed to work with the charging system to improve coil alignment during a parking operation. The complete assist or control system may be configured to work with the charging system. Alternatively, individual elements - such as the sensors and the actuators - may be coupled to the charging system to assist with coil alignment.

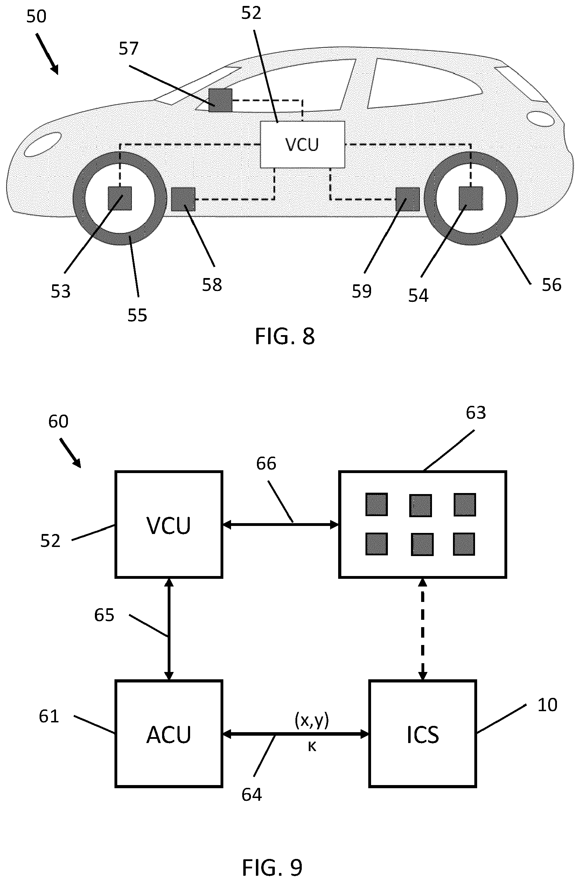

FIG. 8 is a schematic illustration of a car 50 with a vehicle control unit VCU 52 and associated transducers coupled with various parts of the car. The vehicle control unit VCU 52 receives information from - and provides commands to - transducers 53, 54 associated with the wheels and brakes 55, 56 and a transducer 57 associated with the steering and the driving pedals (not shown). Most cars are now supplied with an automatic braking system ABS (not shown) including transducers that operate the brakes under certain conditions. These ABS transducers may be suitable for use as the transducers 53, 54 in the diagram. Some cars have gas suspension elements that can be controlled by the VCU 52 via transducers 58, 59 to adjust the height and ride of the vehicle.

Turning to FIG. 9, there is shown an arrangement in which the ICS 10 and VCU 52 are coupled to transfer information concerning alignment of the vehicle 50 (see FIG. 8) in the parking space and relative to the ground coil. These elements together comprise a coil positioning system 60.

The VCU 52 operates in the manner described with reference to FIG. 8 until the car is within range of the ground coil 14. This may be determined by way of the proximity sensors 32, 33, 34 in the ICS 10, as shown in FIG. 1, or by an external source of positional data, e.g. GPS or other satellite-based system. When this position is reached, the ICS 10 begins sending position (x, y) information to an adaptive control unit ACU 61 associated with the ICS 10.

Coupling factor $\kappa$ information may also be sent to the ACU 61 once the ground coil is covered by the vehicle, say in the last metre before alignment. Since the coupling factor $\kappa$ is directly proportional to the distance between the coils, its use will typically allow greater accuracy in the positioning of the coils relative to each other. Alternatively, the same accuracy may be achieved at a lower cost, as compared to a positioning system without access to coupling factor $\kappa$ information. Nevertheless, use of the coupling factor here and in the following is optional.

The ACU 61 converts the (x, y) and $\kappa$ information into a form that is suitable for interpretation by the vehicle control unit VCU 52. The ACU 61 also generates dynamic control parameters including the direction of displacement from the offset ($\Delta$x, $\Delta$y) data and the coupling factor $\kappa$. The VCU 52 responds to the data by sending control signals to and receiving data from the various transducers on the car (see for example transducers 53, 57, 58 in FIG. 8) shown collectively as a transducer set 63 in the drawing.

The positioning system 60 is presented in FIG. 9 in a way that helps understand the flow of data and the functionality between the coupled ICS 10 and VCU 52. In practice the ACU 61 may, as shown, be a separate unit or its functionality may be built into the controller 30 of the ICS 10 (see FIG. 1) or, indeed, into the VCU 52. Moreover, the interconnecting lines 64, 65 and 66 may in practice be a data bus, e.g. a controller area network (CAN bus) that is now present in many cars. All the elements in FIG. 9 would thus be able to communicate with each other via the bus, without having to pass information through other elements. This would, for example, allow information to be exchanged between the transducers in the set 63 and the controller of the ICS 10.

Alternatively or additionally, the interconnections 64, 65, 66 could be made via a wireless link such as Bluetooth or Wi-Fi. The exact details depend on the engineering brief and design choices made for a particular installation.

The elements of the positioning system 60 cooperate to form a closed loop feedback as the vehicle is manoeuvred into a parking space. The VCU 52 operates as a conventional automatic or assisted parking system. As a car is manoeuvred into a parking space, the first dimension of concern is alignment along the x-axis, i.e. the longitudinal axis of the vehicle and the parking space. Movements in the $\gamma$-direction are necessary to ensure correct longitudinal axis alignment. To this end data from the ICS 10 identifying the y-offset $\Delta$y (see FIG. 3) is streamed by the ACU 61 to the VCU 52. The VCU 52 controls the vehicle to drive in the x-direction into the parking space. While doing this, the VCU 52 steers the vehicle in response to y-offset data so as to minimise $\Delta$y to a specified tolerance, ideally $\Delta$y = 0.

Lane assist may be used here to place the vehicle centrally in the parking space, thereby aligning the x-axes of the vehicle and the space. Parking spaces are commonly defined by lines painted on the ground. These lines provide a convenience reference - similar to lanedefining lines on the highway - for the lane assist operation. This can be triggered when the ICS controller 30 (see FIG. 1) couples the GPM 12 and the CPM 22, e.g. via the communication paths 31a, 31b, and thereby determines that the CPM 22 is close to the GPM 12.

As the vehicle continues to move into the space, the VCU 52 continues to monitor data representing the y-offset $\Delta y$ but the focus moves to the x-offset $\Delta x$ between the coils. When the vehicle is well into the parking space and it is safe to energise the coils, the ICS begins measuring the coupling coefficient or factor $\kappa$ between the coils. Depending on the location of the coil on the ground and the coil on the vehicle, this may not begin until the final, say, 300mm of the parking manoeuvre.

Since the coupling factor $\kappa$ is also an indication of the offset or distance between the coils, it too is taken into account during coil alignment. Use of the coupling factor here and in the following is optional. Use of coupling factor $\kappa$ data will typically allow greater accuracy for the same cost or the same accuracy at a lower cost, as compared to a positioning system without access to coupling factor $\kappa$ information.

The ACU 61 converts the (x, y) and $\kappa$ information into a form that is suitable for interpretation by the vehicle control unit VCU 52. The ACU 61 can also generate dynamic control parameters including the direction of displacement from the offset ($\Delta x$, $\Delta y$) data and the coupling factor $\kappa$. The VCU 52 responds to the data by sending control signals to and receiving data from the various actuators and sensors on the car (see for example transducers 53, 57, 58 in FIG. 8) shown collectively as transducer set 63 in the drawing.

An alternative or supplementary source of data on the position of the vehicle is the odometer, which gives instantaneous speed data, and an angular sensor on the steering wheel. This data provides fast access to position and direction approximations which may be updated more quickly than the ACU 61 can calculate offset ($\Delta x$, $\Delta y$) and coupling factor $\kappa$ data. Thus coarse positioning can be done quickly using speed and wheel angle, and finer positioning achieved through compensation with the data calculated by the ACU 61.

The speed of the vehicle may be reduced so that the vehicle creeps forward toward alignment and stops when $\Delta x$ is equal to zero within tolerance and $\kappa$ has reached an optimal value. The need to do this does, of course, depend on the rate at which ($\Delta x$, $\Delta y$) and $\kappa$ data is updated by the ICS and the ACU and sent to the ACU 61.

All of this can be done automatically - i.e. without driver input - by the elements shown in FIG. 9 working together in the manner just described. It can also be done in a way that allows the driver to maintain control over the full parking manoeuvre. This is achieved by the ACU 61 and the VCU 52 controlling selected transducers in the car 63 to provide feedback to the driver.

Steering feedback involves the ACU 61 controlling actuator(s) 57 (see FIG. 8) coupled to the steering to apply a counter-force or torque thereto. The torque transmits through the steering wheel as a signal to the driver to turn the steering wheel in one direction or the other. The torque may be presented in any one of a number of different ways.

One way is to make it harder for the wheel to turn in one direction and easier in the other direction. Another way is to apply pulses to the steering that indicate which way the wheel should be turned. The driver turning the wheel in the indicated direction results in a reduction of the y-offset $\Delta y$ as the vehicle moves into the parking space. An opposing force could be applied by the actuator 57, making it harder for the driver to push down on the pedal.

Most vehicles have some degree of what is popularly known as 'fly-by-wire' control. There is no mechanical connection between the steering wheel and the road wheels. Instead turning of the steering wheel causes a sensor associated therewith to generate a signal that is translated into movement by a suitable actuator coupled with the wheels. Similarly, depressing a pedal does not directly drive the electric motor, it causes a sensor to generate signals that are acted on by the vehicle's control systems to speed up or slow down.

Thus, another way of providing feedback is to vary the responsiveness of the car's control system to turns of the steering wheel or depression of pedals. For example, more turns of the steering wheel or greater depression of a pedal may be required to achieve a given degree reaction by the car. In some systems this may be achieved by a relatively straightforward change to the fly-by-wire software, making the steering wheel, pedals, etc. more or less sensitive to movement by the user (driver). Haptic feedback may thus be achieved through control of the wheels, the brakes and the electric motor that drives the car.

In the short distance before alignment the y-offset $\Delta y$ should be minimal, merely requiring minor adjustments to keep the car on axis. Now the x-offset $\Delta x$ becomes critical. Feedback is therefore provided to the driver in another way to indicate the reduction in spacing between the coils as the car continues into the parking space. The VCU 52 responds to changes in $\Delta x$ data from the ICS 10 and ACU 61 by applying torque to selected actuators in the set 63 on the vehicle. The application of torque by the actuators 63 on the car simulates or approximates the sensation of the vehicle rolling into and out of a dip.

This simulation is illustrated in FIGs. 9 to 15 of the accompanying drawings. The figures follow the same convention for +ve and -ve directions as explained above in relation to FIGs. 2 and 3. Thus, +ve vales of x correspond to the car moving into the space toward the ground coil and -ve x indicates the coil on the car having moved over and past the ground coil. Positive values of z (+z) represent the coil moving down toward the ground coil and -z is the coil moving up away from the ground coil.

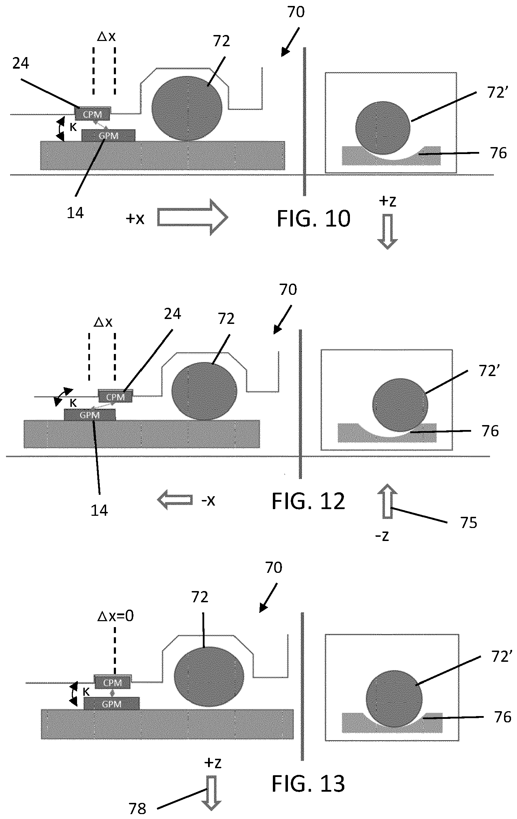

Starting with FIG. 10, one end of a vehicle 70 with a wheel 72 is shown travelling forward in a parking space in in the direction +x represented by arrow 74. As shown coils in the GPM 10 on the ground and in the CPM 22 on the vehicle are beginning to overlap. The position difference ($\Delta$x) and coupling factor $\kappa$ data are reducing toward a minimum. At this position, the VCU 52 controls actuators coupled with the (ABS) brakes 53, 54, the steering and the pedals 57. As shown to the right of FIG.9, this control of the actuators simulates the sensation of the car accelerating slightly giving the sensation of the vehicle dropping in the direction of arrow +z and the wheel 72' rolling into the dip 76.

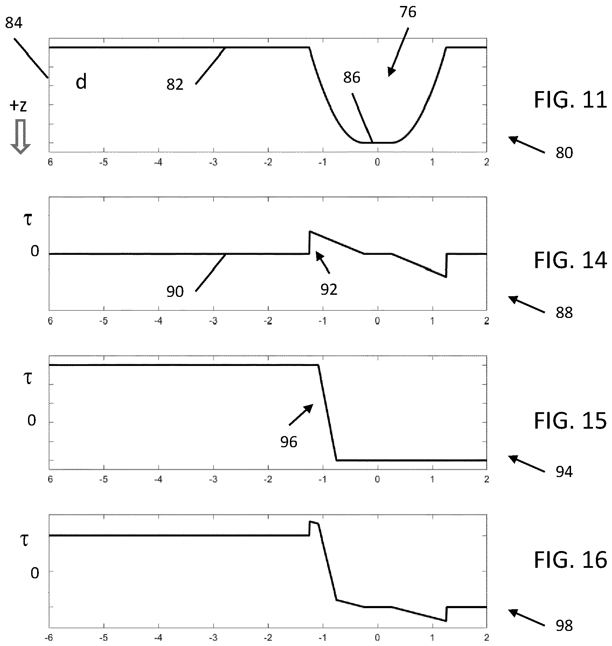

FIG. 11 shows this motion in the form of a graph 80. The major horizontal line 82 in the graph corresponds to ground level. The depth of the dip 76 in the direction of arrow +z is shown against an arbitrary vertical scale 84. The scale 84 is arbitrary because the dip 76 is simulated. The simulated dip would be deep enough to be felt by the driver through the controls, e.g. the responsiveness of the pedals.

The horizontal axis is similarly arbitrary. But since it is related to forward (x) motion of the vehicle 70, the width of the dip would need to be greater than the diameter of a wheel, say 600-1000mm. The simulated dip 76 should include a flat region 86 corresponding to the location where the (x, y) position and coupling factor $\kappa$ have values deemed to be optimal within tolerance. The region 86 would be similar in size to that specified in the above-mentioned relevant Standards, say $\pm$70mm. The region 86 could be made smaller to take advantage of the greater accuracy provided by the coupling factor $\kappa$.

FIG. 12 illustrates what happens where the car passes beyond the position where the coils are aligned. The VCU 52 controls the actuators to simulate the wheel 64 rolling out of dip 76. Again, the VCU 52 controls actuators coupled with the (ABS) brakes 53, 54 and the steering and pedals 57. Making the accelerator pedal less responsive requires the driver to press down further on the pedal. Thus, the driver has to do more work to make the motor drive the car harder. in this situation control of the actuators simulates the sensation of the car decelerating slightly as the wheel 72' rolls out of the dip 76. As the car is reversed the simulation is of the wheel 64 rolling back into the dip 66b. Essentially, this is the reverse of what is shown in FIG. 10.

In FIG. 13 the car is in an optimal position, i.e. $\Delta$x and $\Delta$y equal zero within tolerance and $\kappa$ is optimal. At this point the VCU 52 will apply the handbrake (parking brake) to prevent further movement. If further driver feedback is felt necessary additional torque could be applied to the pedal increasing its opposition to driver actuation or the pedals could be made less responsive to actuation.

Additionally or alternatively, in a vehicle with controllable suspension, e.g. gas suspension, the associated actuators 58, 59 (see FIG. 8) could be deployed to increase realism of the simulation. The VCU 52 could effect a slight reduction in height - by an amount +z in the direction of arrow 78, simulating the wheel resting in the dip 76 as shown.

Moreover, the suspension actuators 58, 59 may be deployed to increase or reduce the height of the vehicle and thus increase or reduce the gap between the coils. Here coupling factor $\kappa$ data from the ICS 10 via the ACU 61 provides feedback to the VCU 52 as the height of the vehicle is adjusted. Since a high coupling factor is undesirable because of the potential to damage the power electronics, x, y positioning may be used together with changes in height z to adjust the vehicle's position away from (0, 0). Where height adjustment is not available, this (x, y) offset can be used to achieve a similar result. This allows a sweet spot to be found for the installation where the parking position, coupling factor and charging height are determined to give optimal charging.

Defining a lower height limit ensures the vehicle is not lowered to the extent that there is a mechanical interference under the vehicle, say between the GPU 12 and the CPU 22. In the interest of safety any height adjustment should be done during the parking manoeuvre. When the vehicle is parked there is a risk that a person or animal could put themselves in a position where they could be trapped were the height to be automatically changed.

FIG. 14 is a graph 88 on the same y-axis scale as the graph in FIG. 11. That graph 80 serves as a frame of reference for the graph 88. Fig. 14 shows torque $\tau$ applied to the actuators to simulate the wheel 72' rolling into and out of the dip 76. As the car approaches the GPU 10 no torque - or no additional torque - is applied. This normal level is represented by the horizontal line 90. Torque is increased at 92 as the wheel 72' rolls into the dip 76, falls back to normal at 94 where the 'wheel' is in the dip, and is increased (in the reverse of 92) as the wheel 72' rolls out of the dip 76.

FIG. 15 is a graph 94 on a similar scale to illustrate forces applied by the driver to the throttle pedal (not shown) to counter the torque $\tau$ from the actuators. The driver applies constant pressure until the simulated dip 76 is reached. When the driver feels the opposing force from the torque $\tau$ they respond by reducing pressure, causing the applied force to fall 96. FIG. 16 is a graph 98 representing the sum of torques applied during this manoeuvre.

The way in which the responsiveness of the pedals or steering wheel is varied to give feedback can be represented by graphs similar to those in FIGs. 14 to 16, with the vertical axis representing responsiveness instead of torque.

Ground pad module GPM 12 installation in a parking space is usually permanent or at least semi-permanent. GPMs are heavy and are not designed to be relocated to another parking space. Once a ground pad is in place, it is unlikely to be moved. The ACU 61 (see FIG. 9) or other parts of the controller 30 located in or with the GPM 12, holds parameter data relating to the parking space and its immediate surroundings.

There is a wide range of information that is useful in parking a vehicle in a given space. The information includes identification (e.g. a name or number) of a space, its location (e.g. GPS) orientation (a bay or parallel parking space) and dimensions. Supplementing this is information identifying obstacles - e.g. walls and other objects - to be avoided during parking or unusual characteristics, e.g. a parking space on a (steep) incline. The location of the coil in the space, is also useful because the coil's location dictates whether the vehicle may be parked forward or reverse in the space. Knowing this allows a parking trajectory to be identified or calculated. Further information may identify spaces that cater for drivers or passengers with special requirements, e.g. disabled drivers or parents with young children.

These parameters may be loaded in advance or added when the GPM is installed. They may be updated from time-to-time. The parameters are transferred to the CPM 22 when a connection is established and used by the VCU 52 (FIG. 9) during the parking operation. For a vehicle that often parks at the same location, the parameter data may be held locally in the VCU 52 or other parts of the controller 30 located in or with the CPM 22.

This information can be used in any of the above parking operations to make parking less of a task and more efficient. This helps to improve the accuracy of driving into a space and alignment of coils. It can also be used before the vehicle begins a parking manoeuvre. It can be used to assist in selection of a parking space.

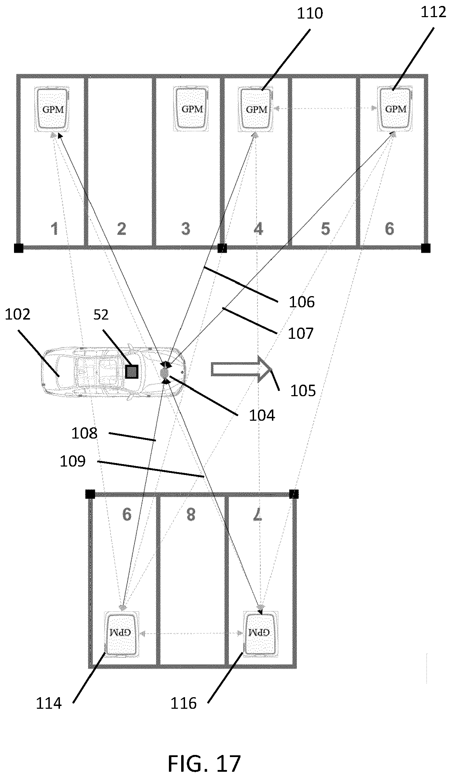

FIG. 17 shows a car 100 at a position between two rows of parking spaces or bays 1 to 6 and 7 to 9. Some of the parking spaces, e.g. bays 4, 6, 7 and 9 have a ground pad module 110, 112, 114, 116 installed. Others, e.g. bays 5 and 8, do not. The car 102 has a car pad module CPM 104 located toward its front and a VCU 52, which is part of the positioning system 60 shown in FIG. 9. In this example, assume the car is travelling in the direction of arrow 105.

Information is transferred via links 106, 107, 108, 109 between the CPM 124 and the various GPMs 110, 112, 114, 116. This information includes the above-mentioned parameters concerning the parking spaces and their surrounds. It also contains information on whether the bay is occupied or open. This allows the CPM 124 to determine which bays are available with a GPM 110, 112, 114, 116 to which the CPM 124 can couple for charging while parked.

As shown in FIG. 17, the car 102 has already passed bays 1 and 9. From the perspective of the CPM 124, the GPMs are behind it and would require the car 102 to reverse to get to a position where it could drive forward into this spaces. Reversing into a space is, of course, well within the capabilities of a vehicle positioning system. For the purpose of explanation only it is assumed that the vehicle will drive forward into a parking space.

The VCU 52 associated with the CPM 124 also holds parameters associated with the car 102. These parameters include the length and width of the car and the radius of its turning circle. It also includes information identifying the location of the centre of the coil (or other reference position related thereto) on the car. From this the positioning system is able to determine which bays are available and suitable for the car. The best candidates for receiving the car 102 in this example are bays 4, 6 and 7. Each of these bays is forward of the front of the car and the CPM 124.

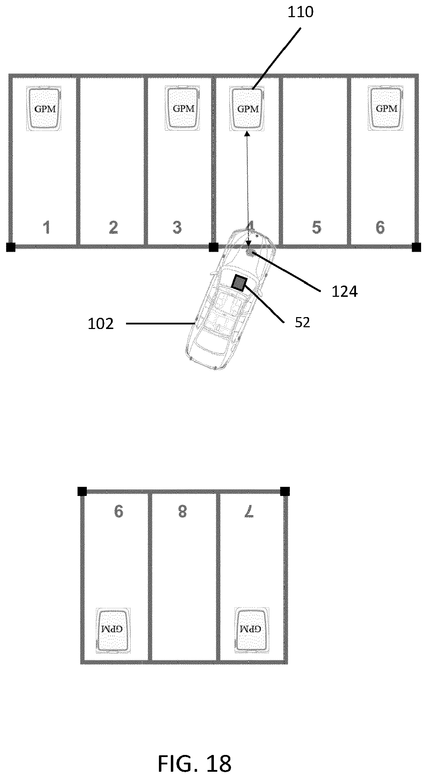

In FIG. 18 bay 4 has been selected because it is the nearest available candidate. The positioning system 60 will normally make the selection. The system 60 can also be configured to allow the driver to select a space preferred by them. The car 102 is driven toward and into the bay 4. Communication links to the GPMs in other bays are disconnected so that the CPM 124 and the GPM 110 can operate together to control positioning, engagement and coupling. When the car 102 is this close other positioning functions among those described herein above engage to guide the centre of the coil in the CPM 124 over the centre of the coil in the GPM 110.

It should be appreciated that the above described parking operations are suitable for use in any parking space and are not dependent on the presence of an inductive charging system ICS 10. The operations may be used simply to enhance parking in any space regardless of whether or not other services are available.

The size of parking spaces varies between countries. While some places are generous, many are not because ground space is at a premium. Many parking spaces are relatively small and anything that can be done to make the best use of what is available is clearly desirable. This kind of driver feedback helps a driver to place a vehicle more squarely in a space. And it helps the driver to do this regardless of whether the vehicle is electric or the space contains service equipment.

Alternative vehicle charging systems are available that are not based on magnetic coupling. Plug-in arrangements allow power to be transferred along wires and cables. Since these cables can present a trip hazard, work has been done in developing automated plug-and-socket arrangements. As the vehicle advances into a parking space, automated or assisted parking aligns the plug and the socket. With the vehicle properly positioned in the space, the final connection is made through an automated mechanism that mechanically couples the plug and socket. These automated plug installations may be enhanced through the use of the above described parking operations.

Having described by reference to the accompanying drawings: a pad module for use with another pad module to transfer power magnetically in an electric vehicle charging system; a method of transferring power magnetically from one pad module to another in an electric vehicle charging system; an apparatus for and method of assisting a driver in parking a vehicle at a parking position in a parking space; and an apparatus and method for guiding a vehicle to a parking position, it is to be understood that the same have been described by way of example only and that modifications and variations such as will occur to those possessed of appropriate knowledge and skills may be made without departure from the spirit and scope of the invention as set forth in the accompanying claims and equivalents thereof.

**Claims**

1.  A pad module for use with another pad module to transfer power magnetically in an electric vehicle charging system, the pad module comprising:

    a first coil for transferring power via a magnetic field with a second coil in another pad module;
    a first driving circuit for the first coil;
    a controller for controlling the driving circuit to apply a known energisation to the first coil to result in energisation in a second coil, and for calculating from the applied energisation and the resulting energisation a coupling factor between the first coil and a second coil for use as an indication of distance between the first coil and a second coil.

2.  A pad module as claimed in claim 1, wherein the driving circuit is operable to apply energisation to the first coil in the form of a known current.

3.  A pad module as claimed claim 1 or 2, wherein the controller is operable to calculate the coupling factor from resulting energisation as a current in a second coil.

4.  A pad module as claimed in claim 1, 2 or 3, wherein the coupling factor is determined as a ratio between the applied energisation and the resulting energisation.

5.  A pad module as claimed in any preceding claim, further comprising:

    at least one signalling device for providing information relating to relative position between the first coil and a second coil; and
    a position controller responsive to the information from the signalling device and the calculated indication of distance for controlling the relative position between the first coil and a second coil.

6.  A pad module as claimed in any preceding claim, suitable for installation at a vehicle as a vehicle pad module.

7.  A pad module as claimed in claim 6, wherein the at least one signalling device is suitable for placement at locations on the vehicle.

8.  A pad module as claimed in claim 7, wherein the controller is couplable to a suspension actuator and operable to control the same to vary height of a vehicle depending on the indication of distance.

9.  A pad module as claimed in any of claims 1 to 5, suitable for installation at a parking location as a ground pad module.

10. A pad module as claimed in claim 9, wherein the at least one signalling device is suitable for placement at locations in the vicinity of the parking location.

11. An inductive power transfer system comprising a vehicle pad module as claimed in claim 6, 7 or 8, and a ground pad module as claimed in claim 9 or 10.

12. A method of transferring power magnetically from one pad module to another in an electric vehicle charging system, the method comprising:

    driving a first coil in the one pad module to generate a magnetic field;
    transferring power from the first coil via a magnetic field to a second coil in another pad module;
    controlling the driving to apply a known energisation to the first coil to result in energisation in a second coil, and calculating from the applied energisation and the resulting energisation a coupling factor between the first coil and a second coil for use as an indication of distance between the first coil and a second coil.

13. A method as claimed in claim 12, wherein the energisation is applied to the first coil in the form of a known current.

14. A method as claimed claim 12 or 13, the coupling factor is calculated from resulting energisation as a current in a second coil.

15. A method as claimed in claim 12, 13 or 14, wherein the coupling factor is determined as a ratio between the applied energisation and the resulting energisation.

16. A method as claimed in any of claims 12 to 15, further comprising:

providing information from a signalling device relating to relative position between the first coil and a second coil; and
controlling the relative position between the first coil and a second coil in response to the information from the signalling device and the calculated indication of distance.

17. An apparatus for assisting a driver in parking a vehicle at a parking position in a parking space, the apparatus comprising:

a controller;
a sensor mountable to the vehicle relative to a location on the vehicle and coupled with the controller for providing data relating the position on the vehicle and the parking position;
at least one transducer mountable to the vehicle and coupled with the controller, and wherein the controller is operable to respond to position data from the sensor by effecting operation of the transducer to provide haptic feedback for a driver of the vehicle on proximity of the position on the vehicle and the parking position.

18. An apparatus as claimed in claim 17, wherein the at least one transducer is couplable with one or more of:

a steering wheel and operable to apply feedback in the form of torque or pulses or both in a manner that encourages a driver to steer the vehicle to bring the location in the vehicle toward the parking position;
a driving pedal and operable to apply feedback in the form of an opposing force requiring greater force by a driver to push down on the pedal;
a brake and operable to apply feedback in the form of braking to slow movement of the vehicle in the parking position;
a suspension element for changing height of the suspension as the position on the vehicle approaches the parking position.

19. An apparatus as claimed in 17 or 18, wherein the at least one transducer is couplable with one or more of a steering wheel, a driving pedal and a brake of the vehicle, and is operable to change responsiveness to driver actuation thereof.

20. An apparatus as claimed in claim 17, 18 or 19, wherein the at least one transducer is operable to accelerate or decelerate the vehicle to simulate a wheel of the vehicle rolling into, out of, or settling in a dip.

21. A method of assisting a driver in parking a vehicle at a parking position in a parking space, the method comprising:

providing data relating the position on the vehicle and the parking position from a sensor mountable to the vehicle relative to a location on the vehicle;
responding to position data from the sensor by effecting operation of a transducer to provide haptic feedback for a driver of the vehicle on proximity of the position on the vehicle and the parking position.

22. A method as claimed in claim 21, comprising coupling the at least one transducer with one or more of:

a steering wheel with the transducer applying feedback in the form of torque or pulses or both in a manner that encourages a driver to steer the vehicle to bring the location in the vehicle toward the parking position;
a driving pedal with the transducer applying feedback in the form of an opposing force requiring greater force by a driver to push down on the pedal;
a brake with the transducer applying feedback in the form of braking to slow movement of the vehicle in the parking position;
a suspension element with the transducer changing height of the suspension as the position on the vehicle approaches the parking position.

23. A method as claimed in 21 or 22, comprising coupling the at least one transducer with one or more of a steering wheel, a driving pedal and a brake of the vehicle, with the transducer changing responsiveness to driver actuation thereof.

**24.** A method as claimed in claim 21, 22 or 23, comprising coupling the at least one transducer with an engine or a brake or both of the vehicle, with the transducer accelerating or decelerating the vehicle to simulate a wheel of the vehicle rolling into, out of, or settling in a dip.

**25.** An apparatus for guiding a vehicle to a parking position, the apparatus comprising:

a controller for controlling driving of the vehicle; and
at least one sensor mountable to the vehicle relative to a location on the vehicle and coupled to the controller for use in providing data relating the position on the vehicle and the parking position, and
wherein in use the controller calculates a path to the parking position based on parameters defining characteristics of the parking position and data from the sensor.

**26.** An apparatus as claimed in claim 25, further comprising a store for holding data representing the parameters defining characteristics of the parking position.

**27.** An apparatus as claimed in claim 25 or 26, wherein the controller is operable to select a parking position from a plurality of candidate parking positions.

**28.** An apparatus as claimed in claim 27, wherein the controller is operable to receive the parameters defining characteristics of the parking position once the parking position has been selected.

**29.** An apparatus as claimed in of claims 25 to 28, wherein the parameters comprise one or more parameters from a set including the position of, orientation of, size of and availability as a candidate of the parking position.

**30.** An apparatus as claimed in any of claims 25 to 29, wherein the controller is operable to calculate the path based on parameters associated with the vehicle.

**31.** An apparatus as claimed in claim 30, wherein the parameters associated with the vehicle include one or more from a set including, the position of, orientation of, size of and speed of movement of the vehicle, and the location of the sensor on the vehicle.

**32.** An apparatus as claimed in claim 30 or 31, wherein the controller is operable:

to calculate the path based on past guidance,
to adapt the calculation to compensate for differences with current guidance,
to modify parameters accordingly, and
to store the compensation and modification for future parking guidance.

**33.** A method for guiding a vehicle to a parking position, the method comprising:

providing data relating the position on the vehicle and the parking position by at least one sensor mountable to the vehicle relative to a location on the vehicle;
calculating a path to the parking position based on parameters defining characteristics of the parking position and data from the sensor; and
controlling driving of the vehicle along the calculated path.

**34.** A method as claimed in claim 33, further comprising holding in a store data representing the parameters defining characteristics of the parking position.

**35.** A method as claimed in claim 33 or 34, further comprising selecting a parking position from a plurality of candidate parking positions.

**36.** A method as claimed in claim 35, further comprising receiving the parameters defining characteristics of the parking position once the parking position has been selected.

**37.** A method as claimed in of claims 33 to 36, wherein the parameters comprise one or more parameters from a set including the position of, orientation of, size of and availability as a candidate of the parking position.

**38.** A method as claimed in any of claims 33 to 37, further comprising calculating the path based on parameters associated with the vehicle.

**39.** A method as claimed in claim 38, wherein the parameters associated with the vehicle include one or more from a set including, the position of, orientation of, size of and speed of movement of the vehicle, and the location of the sensor on the vehicle.

**40.** A method as claimed in claim 38 or 39, further comprising:

calculating the path based on past guidance,
adapting the calculation to compensate for differences with current guidance,
modifying parameters accordingly, and
storing the compensation and modification for future parking guidance.

FIG. 1

FIG. 2

FIG. 3

FIG. 7

FIG. 4

FIG. 5

FIG. 6

FIG. 8

FIG. 9

FIG. 10

FIG. 12

FIG. 13

FIG. 11

FIG. 14

FIG. 15

FIG. 16

FIG. 17

FIG. 18

Europäisches
Patentamt
European
Patent Office
Office européen
des brevets

**EUROPEAN SEARCH REPORT**

Application Number

EP 21 16 7708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/320394 A1 (RIEDEL JAN [DE] ET AL) 9 November 2017 (2017-11-09) * paragraph [0001] – paragraph [0020]; claims 1-3 * * paragraph [0042] – paragraph [0060]; figures 1-3 * | 1-15 | INV. B60L53/122 B60L53/30 B60L53/36 B60L53/38 B60L53/66 H02J50/10 |
| X | GB 2 500 691 A (JAGUAR CARS [GB]) 2 October 2013 (2013-10-02) * page 1, line 4 – page 1, line 24; claims 1-6, 15 * * page 5, line 27 – page 10, line 18; figures 1, 2 * | 1-9, 11-15 | H02J50/80 H02J50/90 |
| X | US 2017/313201 A1 (AMARI YUSAKU [JP]) 2 November 2017 (2017-11-02) * paragraph [0001] – paragraph [0016] * * paragraph [0130] – paragraph [0134]; figures 7A, 7B, 8 * | 1,12 | |
| A | DE 10 2016 202460 A1 (BAYERISCHE MOTOREN WERKE AG [DE]) 17 August 2017 (2017-08-17) * paragraph [0001] – paragraph [0026]; figures 1, 2 * | 1,5,12 | TECHNICAL FIELDS SEARCHED (IPC) B60L H02J |

The present search report has been drawn up for all claims

| Place of search | Date of completion of the search | Examiner |
|---|---|---|
| The Hague | 13 January 2022 | Utz, Tilman |

EPO FORM 1503 03.82 (P04C01)

## ANNEX TO THE EUROPEAN SEARCH REPORT
## ON EUROPEAN PATENT APPLICATION NO.

EP 21 16 7708

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2022

| Patent document cited in search report | | Publication date | Patent family member(s) | | Publication date |
|---|---|---|---|---|---|
| US 2017320394 | A1 | 09-11-2017 | CN 106575885 A | | 19-04-2017 |
| | | | DE 102014215299 A1 | | 04-02-2016 |
| | | | EP 3177477 A1 | | 14-06-2017 |
| | | | US 2017320394 A1 | | 09-11-2017 |
| | | | WO 2016020099 A1 | | 11-02-2016 |
| GB 2500691 | A | 02-10-2013 | NONE | | |
| US 2017313201 | A1 | 02-11-2017 | CN 107351698 A | | 17-11-2017 |
| | | | DE 102017207109 A1 | | 02-11-2017 |
| | | | JP 2017200330 A | | 02-11-2017 |
| | | | US 2017313201 A1 | | 02-11-2017 |
| DE 102016202460 | A1 | 17-08-2017 | CN 108473160 A | | 31-08-2018 |
| | | | DE 102016202460 A1 | | 17-08-2017 |
| | | | EP 3416872 A1 | | 26-12-2018 |
| | | | US 2018354528 A1 | | 13-12-2018 |
| | | | WO 2017140470 A1 | | 24-08-2017 |

EPO FORM P0459

For more details about this annex : see Official Journal of the European Patent Office, No. 12/82

**REFERENCES CITED IN THE DESCRIPTION**

**Patent documents cited in the description**

- DE 102020110220